# EUROPÄISCHE PATENTSCHRIFT

(11) **EP 3 669 656 B1**
(45) Veröffentlichungstag und Bekanntmachung des Hinweises auf die Patenterteilung: **10.05.2023**
(21) Anmeldenummer: 18213815.6
(22) Anmeldetag: 19.12.2018
(51) Int. Cl.: A21C 9/08

(54) **VORRICHTUNG UND VERFAHREN ZUM FORMEN VON TEIGLINGEN**
METHOD AND DEVICE FOR SHAPING DOUGH PRODUCTS
DISPOSITIF ET PROCÉDÉ DE FORMATION DE PÂTONS

(43) Veröffentlichungstag der Anmeldung: 24.06.2020
(73) Patentinhaber: Fritsch Bakery Technologies GmbH & Co. KG, 97348 Markt Einersheim (DE)
(72) Erfinder: Bernhardt, Udo, 97346 Iphofen (DE); Wagner, Rainer, 97340 Martinsheim (DE)
(74) Vertreter: Grünecker Patent- und Rechtsanwälte PartG mbB

(56) Entgegenhaltungen:
- EP-A1- 0 490 190
- EP-A1- 2 856 880
- DE-A1-102010 027 622
- US-A1- 2014 335 214

## Beschreibung

Die Erfindung betrifft eine Vorrichtung und ein Verfahren zum Formen von im Wesentlichen geradlinigen, insbesondere gewickelten, Teiglingen bei der Herstellung von Backwaren mit ringförmiger Gestalt, insbesondere Croissants, nach dem Oberbegriff des Anspruchs 1. Eine Vorrichtung zum Formen von Teiglingen, insbesondere Croissants, ist beispielsweise aus der DE 10 2010 027 622 A1 bekannt. Bei dieser Vorrichtung werden die Enden der Teiglinge mit zwei Greifern fixiert und ringförmig um eine Haltebacke gebogen. Dabei wird einer der beiden Greifer mit einer Hubvorrichtung vertikal angehoben, um die Enden des Teiglings einander überlappend anordnen zu können. Nach Anordnung der beiden Enden mit einer entsprechenden Überlappung werden sie außerdem an den Enden mit einem Stempel zusammengedrückt, um zu verhindern, dass sich der Teigling während des Backens wieder auseinanderstreckt und dadurch seine ringförmige Gestalt verliert. Eine ähnliche Vorrichtung wird in der US 2014 0 335 214 A1 offenbart.

Nachteilig an dieser Vorrichtung ist es, dass die Enden des Teiglings nicht geführt werden und deshalb keine genaue Position einhalten. Außerdem wird kein definierter Innendurchmesser der rundgebogenen Teiglinge gewährleistet.

Eine weitere Vorrichtung zum ringförmigen Biegen von Teiglingen, insbesondere Croissants, ist aus der EP 0 490 190 A1 bekannt. Auch bei dieser Vorrichtung wird das eine Ende des Teiglings während des Biegens angehoben, um die Enden nach Erreichen der ringförmigen Gestalt einander überlappend anordnen zu können. Zum Anheben des Endes des Teiglings ist dabei an einem der beiden Biegearme ein Vorsprung vorgesehen, der unter dem Ende des Teiglings zum Eingriff kommt. Auch bei dieser Vorrichtung werden die einander überlappenden Enden anschließend mit einem Stempel zusammengedrückt, um sie aneinander zu fixieren.

Nachteilig an dieser Vorrichtung ist es, dass die Fixierung der einander überlappenden Enden nur ungenügend erfolgt. Außerdem können insbesondere sehr kleine Teiglinge, beispielsweise Mini-Croissants, mit dieser Vorrichtung nicht gebogen werden.

Auch in der EP 2 856 880 A1 wird eine Vorrichtung offenbart, bei der eine Platte unter ein Ende des Teiglings geschoben wird, um es anzuheben. Es wird jedoch ein separat bewegliches Führungselement benötigt, um das angehobene Ende von der Platte herunter zu schieben. Diese Vorrichtung ist darauf ausgelegt, Croissants zu formen, deren Enden in dieselbe Richtung weisen.

Ausgehend von diesem Stand der Technik ist es deshalb Aufgabe der vorliegenden Erfindung, eine Vorrichtung zum Biegen von Teigstücken vorzuschlagen, bei der die Fixierung der einander überlappenden Enden des Teiglings zuverlässig erfolgt und mit der insbesondere auch kleine Teiglinge zuverlässig verarbeitet werden können. Weiter ist es Aufgabe der vorliegenden Erfindung, ein Verfahren zum Biegen von Teiglingen in eine ringförmige Gestalt vorzuschlagen.

Diese Aufgaben werden durch eine Vorrichtung und ein Verfahren nach der Lehre der unabhängigen Hauptansprüche gelöst.

Vorteilhafte Ausführungsformen der Erfindung sind Gegenstand der Unteransprüche.

Eine eingehende Analyse der bekannten Biegevorrichtungen zur Herstellung von ringförmig gebogenen Teiglingen hat gezeigt, dass die ungenügende Fixierung der einander überlappenden Enden des Teiglings dadurch verursacht wird, dass der an dem einen Biegearm vorhandene Vorsprung, mit dem das Ende des Teiglings angehoben wird, beim Verpressen der beiden überlappenden Enden noch zwischen den beiden Enden angeordnet ist. Durch diese Anordnung des Vorsprungs zwischen den beiden überlappenden Enden kann nämlich die Fixierung nur unzureichend erfolgen, da ein großer Teil der einander gegenüberliegenden Flächen der beiden überlappenden Enden nicht miteinander in Kontakt kommt, sondern durch den dazwischenliegenden Vorsprung getrennt ist. Durch die dadurch verursachte Verkleinerung der für die Fixierung wirksamen Kontaktfläche, an der die Teigoberflächen der beiden einander gegenüberliegenden Teigenden miteinander verpresst werden, wird das Fixierungsergebnis entsprechend verschlechtert. Erfindungsgemäß ist es deshalb vorgesehen, dass der Haltebacken mit dem zum Anheben des Teigendes vorgesehenen Vorsprung während des Eingriffs am Teigling entlang eines speziellen Verfahrwegabschnitts zwischen einer Anfangsposition und einer Endposition verfahren wird. In der Anfangsposition liegt der Vorsprung auf der Unterseite des Teiglings an, so dass das entsprechende Ende des Teiglings durch Anheben des Vorsprungs vertikal angehoben und dadurch eine überlappende Positionierung der beiden überlappenden Enden realisiert werden kann. Dabei ist es selbstverständlich regelmäßig vorgesehen, dass der Vorsprung nicht nur in der Anfangsposition des Verfahrwegabschnitts auf der Unterseite des Teiglings anliegt, sondern auch beginnend von der Anfangsposition entlang eines großen Teils des Verfahrwegabschnitts. Charakterisiert wird die erfindungsgemäße Vorrichtung dadurch, dass der Vorsprung in der Endposition, in der der Teigling vollständig gebogen ist und die beiden Enden einander überlappen, außer Eingriff des Teiglings gebracht ist. Dies bedeutet also mit anderen Worten, dass der Vorsprung zum Anheben des Endes bei Erreichen der Endposition nicht mehr auf der Unterseite des Teiglings anliegt, so dass dann, wenn die beiden überlappenden Enden des Teiglings mit dem Stempel gegeneinander gedrückt werden, die Fixierung der Teigoberflächen der beiden Enden nicht mehr durch den Vorsprung an dem einen Haltebacken gestört wird. Grundidee der erfindungsgemäßen Vorrichtung ist es also, dass der Vorsprung an dem Haltebacken so entlang eines Verfahrwegs geführt wird, dass er zunächst das Ende des Teiglings anheben kann und dann, sobald das angehobene Ende des Teiglings bereits von dem darunterliegenden Ende des Teiglings abgestützt wird, außer Eingriff gebracht wird, um das anschließende Verpressen der beiden Enden mit dem Stempel nicht zu beeinträchtigen. In welcher Weise der spezielle Verfahrweg mit der gewünschten Verstellung des Vorsprungs am Haltebacken realisiert wird, ist grundsätzlich beliebig. Besonders vorteilhaft ist es, wenn der Vorsprung am freien Ende des Haltebackens übersteht, so dass der Vorsprung in der Anfangsposition quer zur Mittelachse des Teiglings verläuft. Durch eine entsprechende Schwenkbewegung des Haltebackens um eine Lagerachse kann dann das freie Ende des Haltebackens so verschwenkt und dabei entlang des Teiglings verschoben werden, dass das freie Ende des Haltebackens mit dem daran vorspringenden Vorsprung in der Endposition parallel zur Mittelachse des Teiglings verläuft, so dass im Ergebnis der Vorsprung nicht mehr zwischen den beiden überlappenden Enden des Teiglings liegt.

Ein weiterer Vorteil der erfindungsgemäßen Vorrichtung ist es, dass die Vorrichtung komplett auf das Förderband abgesenkt werden kann. Während des Biegevorganges bewegt sich die Vorrichtung in Transportrichtung des Teiglings mit. Da keine Greifer zum greifen der Enden des Teiglings erforderlich sind, ergibt sich eine höhere Betriebssicherheit. Außerdem wird eine verbesserte Formgebung des Teiglings durch Führen/Halten des Teiglings bis zur vollständigen Formung und Fixierung der Enden erreicht.

Um eine möglichst exakte Führung der beiden Enden während des Biegevorgangs und insbesondere während des Stempelns der beiden überlappenden Enden zu realisieren, ist es gemäß einer bevorzugten Vorrichtungsvariante vorgesehen, dass in der Endposition der Abstand zwischen den am Teigling anliegenden Formbacken einerseits und der Rückseite des Haltebackens andererseits gerade der Breite der Enden des Teiglings entspricht. Damit wird im Ergebnis erreicht, dass die Enden des Teiglings zwischen den Formbacken einerseits und den Haltebacken andererseits formschlüssig geführt werden. Außerdem wird gewährleistet, dass die einander überlappenden Enden des Teiglings während des nachfolgenden Stempelns nicht horizontal gegeneinander verrutschen.

Eine optimale Führung der einander überlappenden Enden des Teiglings wird erfindungsgemäß dadurch erreicht, dass die beiden Formbacken in der Endposition übereinanderliegend angeordnet sind.

Erfindungsgemäß ist es erforderlich, dass der Vorsprung an dem einen Formbacken, mit dem das eine Ende des Teiglings angehoben wird, während des Verfahrwegabschnitts, entlang dessen der Teigling ringförmig gebogen wird, aus einer Eingriffsposition, in der er an der Unterseite des Teiglings anliegt, in eine Nicht-Eingriffsposition, in der er außer Eingriff des Teiglings steht, bewegt wird. Zur Realisation eines solchen Verfahrwegabschnitts ist es vielfach nicht ausreichend, wenn der Formbacken dem Biegevorgang des Teiglings folgend an einer Stelle des Teiglings in Eingriff kommt. Stattdessen lässt sich ein solcher Verfahrwegabschnitt viel leichter realisieren, wenn der Formbacken während des Verfahrwegabschnitts, das heißt während des Eingriffs zum Biegen des Teiglings, auf der Oberfläche des Teigling abwälzt oder abgleitet. Um eine solche Wälz- bzw. Gleitbewegung des Formbackens relativ zur Oberfläche des Teiglings während des Biegevorgangs ohne Beschädigung der Oberfläche des Teiglings realisieren zu können, ist es besonders vorteilhaft, wenn an dem Formbacken jeweils eine Gleitfläche vorgesehen ist. Der Formbacken, insbesondere der Formbacken mit dem daran vorgesehenen Vorsprung zum Anheben des Teiglings, kommt mit der Gleitfläche während des Biegevorgangs am Teigling in Eingriff, so dass der Formbacken dann entlang des Verfahrwegabschnitts auf der Oberfläche des Teiglings abgleiten bzw. abwälzen kann.

Beim Rundbiegen der zunächst geradlinigen Teiglinge ist ein Abgleiten bzw. Abwälzen der Formbacken mit ihren Gleitflächen auf der Teigoberfläche erwünscht. Beim an das Rundbiegen der Teiglinge anschließende Öffnen der Formbacken ist ein Abgleiten bzw. Abwälzen der Formbacken mit ihren Gleitflächen auf der Teigoberfläche dagegen unerwünscht, da dadurch die Teigoberfläche unnötig beschädigt wird. Um dies zu verhindern können die Formbacken jeweils zweiteilig ausgebildet sein. Der zweite Teil der Formbacken kann dabei mit einer Antriebseinrichtung relativ zum ersten Teil der Formbacke verschwenkt werden. Am zweiten Teil der Formbacken sind jeweils die Gleitflächen zum Eingriff am Teigling vorgesehen. Beim an das Rundbiegen der Teiglinge anschließende Öffnen der Formbacken ist es dadurch möglich den zweiten Teil der Formbacken ohne Verstellung des ersten Teils nach außen zu schwenken, so dass die Gleitflächen ohne Gleitbewegung von der Teigoberfläche abgehoben werden.

Um die erfindungsgemäß vorgesehene Verstellung des Vorsprungs am Haltebacken, mit dem das eine Ende des Teiglings angehoben wird, zwischen einer Eingriffsposition und einer Nicht-Eingriffsposition realisieren zu können, sind spezielle Verfahrweggeometrien erforderlich. Mit diesen Verfahrweggeometrien ist es vielfach nicht möglich, den gesamten Biegevorgang des geradlinigen Teiglings bis zu seiner gewünschten ringförmigen Gestalt zu realisieren. In diesen Fällen ist es vorteilhaft, wenn die Biegeeinheit zwei zusätzliche Vorformbacken aufweist, die jeweils auf der Außenseite des Teiglings zum Eingriff gebracht werden können. Durch Antrieb der Vorformbacken kann dann der geradlinige Teigling zunächst spangenförmig um den Haltebacken gebogen werden. Anschließend werden dann die eigentlichen Formbacken am Teigling in Eingriff gebracht und durch Verstellung der Formbacken der spangenförmig vorgebogene Teigling in die gewünschte Endgestalt mit den einander überlappenden Enden ringförmig gebogen.

Die konstruktive Ausbildung des Haltebackens ist grundsätzlich beliebig. Beispielsweise kann der Haltebacken rund sein, wobei der Durchmesser des Haltebackens der gewünschten Ausnehmung des rundgebogenen Teiglings entspricht. Als besonders vorteilhaft hat sich ein runder oder dreieckförmiger Querschnitt des Haltebackens erwiesen, wobei die Mitte des geradlinigen Teiglings an einer abgerundeten Spitze des dreieckförmigen Haltebackens zur Anlage kommt. Im Ergebnis kann mit einem solchen dreieckförmigen Haltebacken eine hocheffektive Vorformung und ringförmige Endformung des Teiglings durch Verfahren der Vorformbacken bzw. der Formbacken realisiert werden.

Durch das Biegen des Teiglings werden die Enden ringförmig um den Haltebacken gelegt, so dass der Teigling zuletzt in der ringförmigen Gestalt den Haltebacken umfasst. Um das Lösen des Haltebackens, beispielsweise durch vertikales Zurückziehen des Haltebackens, ohne Beschädigung des Teiglings realisieren zu können, ist es besonders vorteilhaft, wenn der Haltebacken sich nach unten hin verjüngt. Dazu kann der Haltebacken beispielsweise eine konische Form aufweisen. Durch die Verjüngung löst sich die Oberfläche des Haltebackens leicht von der Teigoberfläche, so dass eine Beschädigung des Teiglings beim Zurückziehen des Haltebackens ausgeschlossen ist. Um Teiglinge in unterschiedlicher Größe auf der gleichen Maschine herstellen zu können, ist es besonders vorteilhaft, wenn die Formbacken und/oder der Haltebacken auswechselbar an der Biegeeinheit befestigt sind. Durch entsprechenden Austausch der Formbacken und/oder des Haltebackens und/oder des Stempels und/oder der Vorformbacken kann die Vorrichtung dann auch auf unterschiedlich große Teiglinge angepasst werden. Das Auswechseln der Formbacken und des Haltebackens und/oder des Stempels und der Vorformbacken kann auch durch Auswechseln der gesamten Biegevorrichtung erreicht werden.

Für eine störungsfreie Bearbeitung der Teiglinge beim Rundbiegen ist es von großer Bedeutung, dass die Teiglinge in einer geeigneten Positionierung in die Vorrichtung eingeführt werden, so dass der Haltebacken ungefähr mittig an den Teiglingen zur Anlage kommt. Um dies ohne manuelle Eingriffe realisieren zu können, ist es vorteilhaft, wenn die Vorrichtung einen Lagesensor, insbesondere eine Bildkamera, mit einer Auswerteeinheit umfasst. Mit dieser Lagesensorik kann dann die Position der Teiglinge auf dem Transportband festgestellt und abhängig von der festgestellten Position die gesamte Vorrichtung zum Rundbiegen der Teiglinge entsprechend positioniert werden. Die Vorrichtung nimmt den Teigling dann mittig auf.

Das erfindungsgemäße Biegeverfahren zum Formen von Teiglingen ist wiederum dadurch charakterisiert, dass der an dem einen Haltebacken vorgesehene Vorsprung zum Anheben des Endes des Teiglings entlang eines Verfahrwegabschnitts verstellt wird. Dieser Verfahrwegabschnitt ist dabei dadurch charakterisiert, dass der Vorsprung in der Anfangsposition, in der der Formbacken am Teigling zum Eingriff kommt, an der Unterseite des Teiglings anliegt und auf diese Weise ein Anheben des Endes des Teiglings zu Beginn des Verfahrwegabschnitts realisiert werden kann. Weiter ist der Verfahrwegabschnitt dadurch charakterisiert, dass der am Formbacken vorgesehene Vorsprung jedenfalls in der Endposition außer Eingriff des Teiglings gebracht wurde und somit nicht mehr zwischen den beiden Enden des Teiglings liegt. Auf diese Weise kann verhindert werden, dass das Zusammenpressen der beiden überlappenden Enden durch den Vorsprung behindert wird.

Vorzugsweise sollte der Formbacken mit dem daran befestigten Vorsprung während des Biegeeingriffs mit zumindest einer Gleitoberfläche auf der Oberfläche des Teiglings entlanggleiten oder abwälzen.

Weiterhin vorteilhaft ist es, wenn der geradlinige Teigling nicht alleine durch die Formbacken ringförmig gebogen werden muss, sondern stattdessen zusätzlich zwei Vorformbacken vorhanden sind, mit denen der geradlinige Teigling spangenförmig vorgebogen werden kann. Erst anschließend wird dann der spangenförmig vorgebogene Teigling mittels der beiden Formbacken ringförmig um die Haltebacke gebogen.

Gemäß einer bevorzugten Verfahrensvariante ist es vorgesehen, dass die Formbacken während des Verfahrens des Stempelns ausgehend von der Endposition auseinandergefahren werden, um ein unerwünschtes horizontales Andrücken des Teigs gegen die Innenseite der Formbacken zu vermeiden.

Beim Rundbiegen der zunächst geradlinigen Teiglinge ist ein Abgleiten bzw. Abwälzen der Formbacken mit ihren Gleitflächen auf der Teigoberfläche erwünscht. Beim an das Rundbiegen der Teiglinge anschließende Öffnen der Formbacken ist ein Abgleiten bzw. Abwälzen der Formbacken mit ihren Gleitflächen auf der Teigoberfläche dagegen unerwünscht, da dadurch die Teigoberfläche unnötig beschädigt wird. Um dies zu verhindern können die Formbacken jeweils zweiteilig ausgebildet sein. Der zweite Teil der Formbacken kann dabei mit einer Antriebseinrichtung relativ zum ersten Teil der Formbacke verschwenkt werden. Am zweiten Teil der Formbacken sind jeweils die Gleitflächen zum Eingriff am Teigling vorgesehen. Dadurch ist es möglich, insbesondere während des Verfahrens des Stempels, den zweiten Teil der Formbacken ohne Verstellung des ersten Teils nach außen zu schwenken, so dass die Gleitflächen ohne Gleitbewegung von der Teigoberfläche abgehoben werden. Eine Ausführungsform der Erfindung ist in den Zeichnungen schematisiert dargestellt und wird nachfolgend beispielhaft erläutert.

Es zeigen:
- **Fig. 1**: eine erfindungsgemäße Vorrichtung vor Beginn des Biegevorgangs in Ansicht von oben;
- **Fig. 2**: die Vorrichtung gemäß Fig. 1 nach dem Vorbiegen des Teiglings mit zwei Vorformbacken;
- **Fig. 3**: die Vorrichtung gemäß Fig. 2 nach Erreichen der Anfangsposition der beiden Formbacken zum ringförmigen Biegen des Teiglings;
- **Fig. 4**: die Vorrichtung gemäß Fig. 3 nach Erreichen der Endposition der Formbacken und dem Stempeln der einander überlappenden Enden des Teiglings;
- **Fig. 5**: die Vorrichtung gemäß Fig. 4 in einer vereinfachten perspektivischen seitlichen Ansicht;
- **Fig. 6**: eine zweite Ausführungsform einer erfindungsgemäße Vorrichtung vor Beginn des Biegevorgangs in Ansicht von oben;
- **Fig. 7**: die Vorrichtung gemäß Fig. 6 nach dem Vorbiegen des Teiglings mit zwei Vorformbacken;
- **Fig. 8**: die Vorrichtung gemäß Fig. 7 nach Erreichen der Anfangsposition der beiden Formbacken zum ringförmigen Biegen des Teiglings;
- **Fig. 9**: die Vorrichtung gemäß Fig. 8 nach Erreichen der Endposition der Formbacken und dem Stempeln der einander überlappenden Enden des Teiglings;
- **Fig. 10**: die Vorrichtung gemäß Fig. 9 beim Öffnen der Formbacken in einer vereinfachten perspektivischen seitlichen Ansicht.

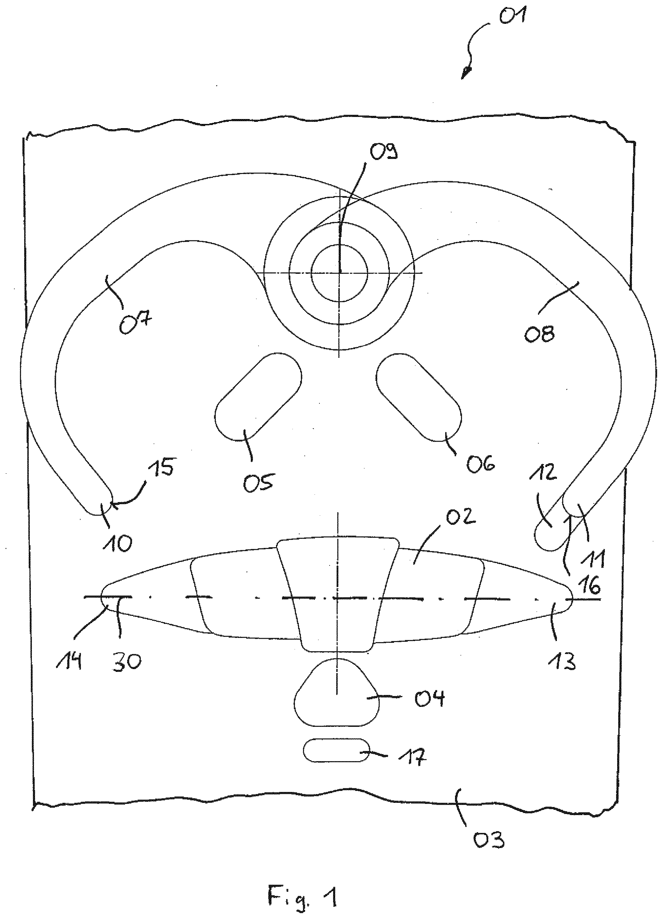

**Fig. 1** zeigt eine Vorrichtung 01 zum ringförmigen Biegen von Teiglingen 02, beispielsweise gewickelten Croissants. In den Zeichnungen Fig. 1 bis Fig. 5 ist die Vorrichtung 01 dabei nur mit den Bestandteilen dargestellt, die für das Verständnis der Erfindung erforderlich sind. Gemäß der Darstellung in Fig. 1 werden die geradlinig um eine Mittelachse 30 gewickelten Teiglinge 02 zunächst auf einem Förderband 03 aufliegend in Richtung eines Haltebackens 04 gefördert. Zwei Vorformbacken 05 und 06 und zwei Formbacken 07 und 08 befinden sich zu diesem Zeitpunkt noch außer Eingriff des Teiglings 02.

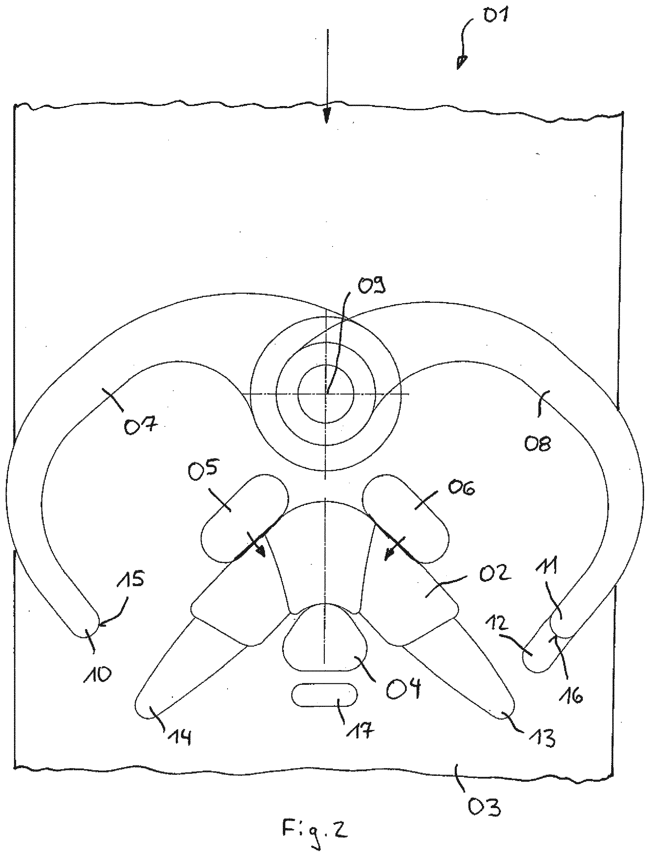

**Fig. 2** zeigt die Vorrichtung 01 mit dem Teigling 02 während des Vorformens des Teiglings 02. Dazu werden die Vorformbacken 05 und 06 gegen die Rückseite des Teiglings 02 gefahren, so dass der Teigling 02 um den dreieckförmigen Haltebacken 04 spangenförmig umgebogen und somit vorgeformt wird.

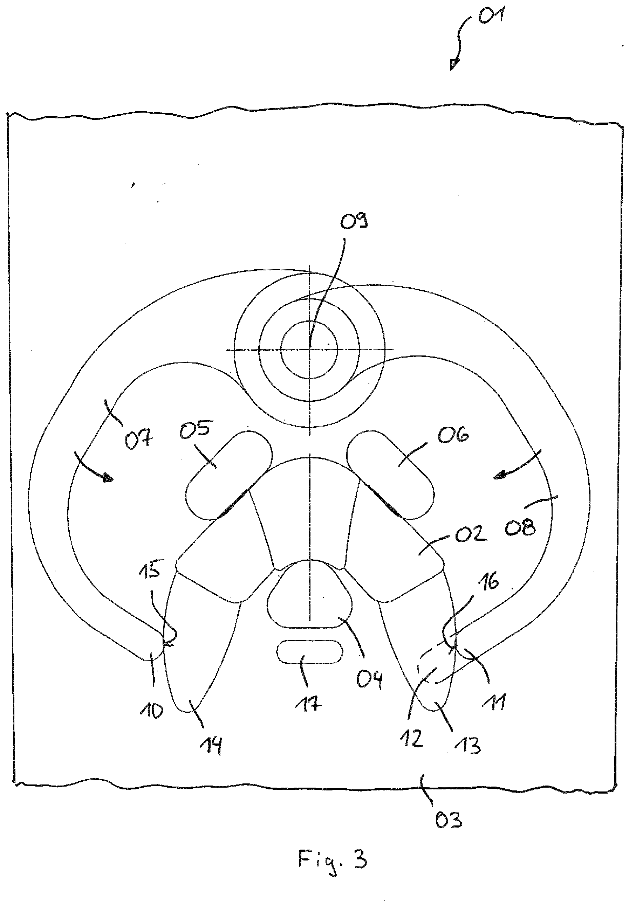

**Fig. 3** zeigt die Vorrichtung 01 mit dem vorgeformten Teigling 02 nachdem die beiden Formbacken 07 und 08 durch Antrieb einer Antriebsachse 09 verschwenkt und damit mit ihren freien Enden 10 und 11 an der Außenseite des Teiglings erstmals zum Eingriff gebracht wurden.

**Fig.3** stellt damit die Anfangsposition der beiden Formbacken 07 und 08 zu Beginn des Verfahrwegabschnitts, mit dem die Teiglinge 02 ringförmig gebogen werden, dar. In dieser Anfangsposition des Verfahrwegabschnitts liegt das freie Ende 11 nicht nur mit seiner horizontalen Kontaktfläche an der Außenseite des Teiglings 02 an. Zusätzlich ist am freien Ende 11 ein überstehender Vorsprung 12 vorgesehen, der in der in Fig. 3 dargestellten Anfangsposition des Verfahrwegabschnitts unter das Ende 13 des Teiglings 02 geschoben wird. Das freie Ende 10 des Formbackens 07 dagegen zeigt keinen Vorsprung auf, so dass das Ende 14 des Teiglings während des anschließenden ringförmigen Biegens nicht angehoben wird, sondern stattdessen auf dem Förderband 03 anliegt.

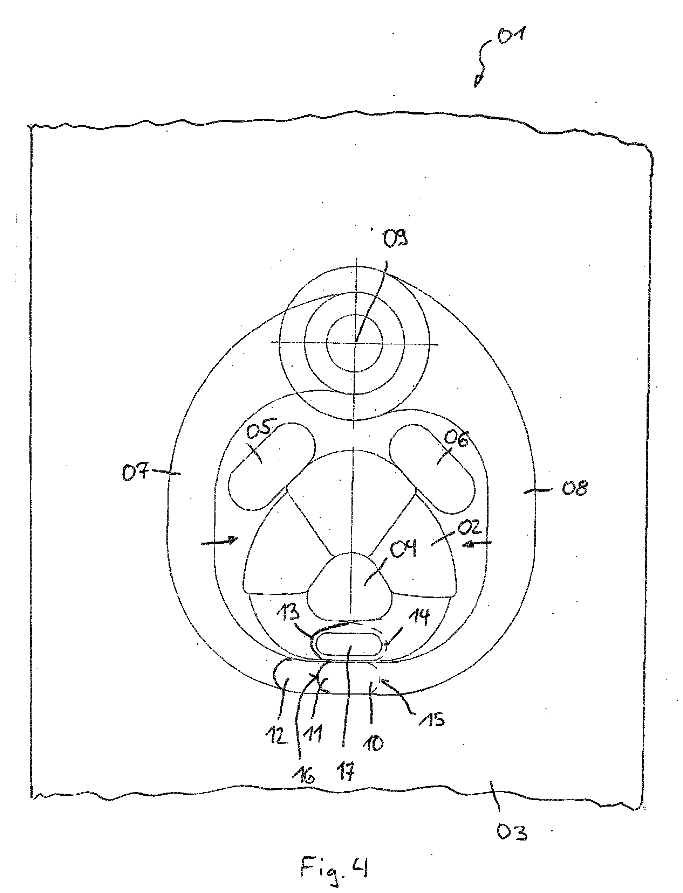

**Fig. 4** zeigt die Vorrichtung 01 in der Endposition der Formbacken 07 und 08 nach Ende des ringförmigen Biegens des Teiglings 02. Der Teigling 02 ist dabei ringförmig um den Haltebacken 04 rundgebogen und die beiden Enden 13 und 14 des Teiglings überlappen einander. Dazu wurde der Formbacken 08 während der Verstellung der in Fig. 3 dargestellten Anfangsposition entlang des Verfahrwegs bis zum Erreichen der in Fig. 4 dargestellten Endposition vertikal angehoben, so dass das Ende 13 des Teiglings 02 über dem Ende 14 angeordnet wurde und dadurch die einander überlappende Anordnung der Enden 13 und 14 ermöglicht wird. Während des Verfahrwegabschnitts zwischen der in Fig. 3 und in Fig. 4 dargestellten Anfangsposition bzw. Endposition wurde der Teigling 02 durch Verfahren der Formbacken 07 und 08 ringförmig um den Haltebacken 04 gebogen. An den freien Enden 10 und 11 der beiden Formbacken 07 und 08 sind dabei Gleitflächen 15 und 16 vorgesehen, die während der Verstellung der Formbacken 07 und 08 zwischen Anfangs- und Endposition auf der Oberfläche des Teigs abwälzen bzw. abgleiten. Durch diese kombinierte Vorschub-Gleit- und Abwälzbewegung wird erreicht, dass der Vorsprung 12 in der in Fig. 4 dargestellten Endposition nicht mehr an der Unterseite des Teigendes 13 anliegt. Stattdessen verläuft der Vorsprung 12 in der in Fig. 4 dargestellten Endposition parallel zu den einander überlappend angeordneten Enden 13 und 14. In dieser Endposition kann dann ein Stempel 17 vertikal nach unten gefahren werden, so dass die beiden Enden 13 und 14 zwischen der Unterseite des Stempels 17 und der Oberseite des Förderbands 03 zusammengedrückt werden, um auf diese Weise die ringförmige Gestalt des Teiglings 02 zu sichern.

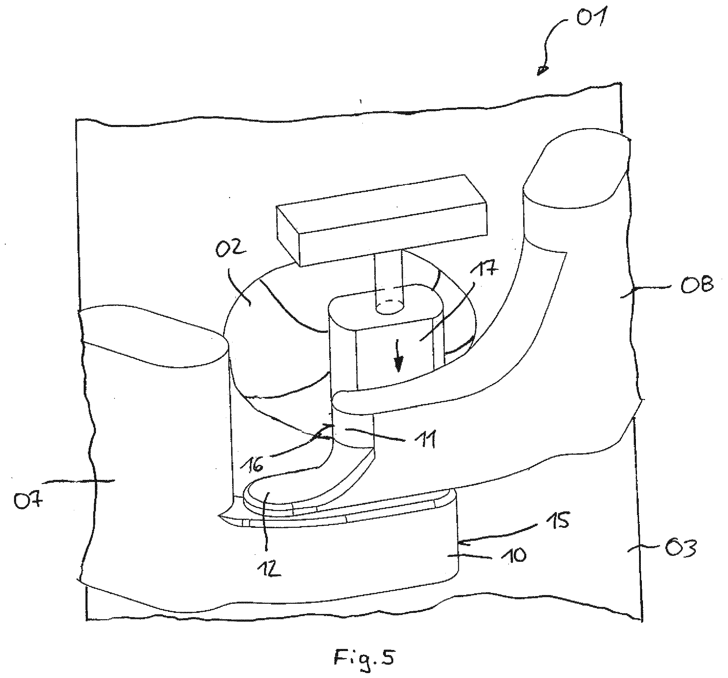

**Fig. 5** zeigt die Vorrichtung 01 mit den beiden Formbacken 07 und 08 in der in Fig. 4 dargestellten Endposition. Zur besseren Erkennbarkeit sind die beiden Vorformbacken 05 und 06 in **Fig. 5** nicht dargestellt. Man erkennt, dass die beiden Formbacken 07 und 08 in der Endposition übereinanderliegend angeordnet sind und parallel zu den ringförmig gebogenen Enden 13 und 14 des Teiglings 02 verlaufen. Da der Vorsprung 12 auf diese Weise nicht mehr zwischen den beiden Enden 13 und 14 des Teiglings 02 zum Liegen kommt, kann der Teigling im Bereich der Enden 13 und 14 durch vertikale Verstellung des Stempels 17 störungsfrei zusammengedrückt werden.

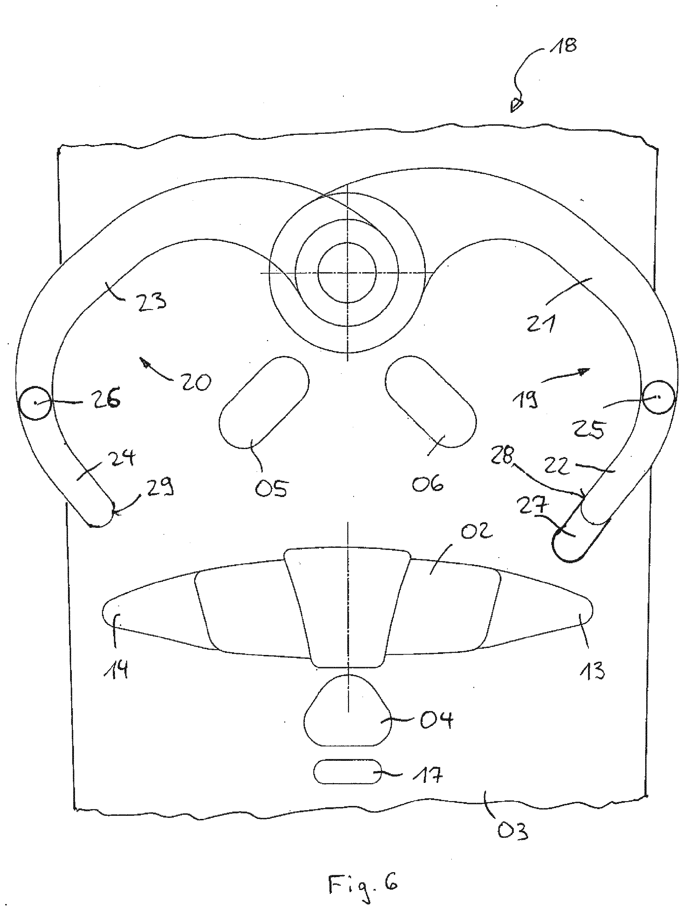

**Fig. 6** zeigt eine zweite Ausführungsform 18 einer erfindungsgemäßen Vorrichtung 18 zum ringförmigen Biegen von Teiglingen 02, beispielsweise gewickelten Croissants. Die Vorrichtung 18, die weitgehend der Vorrichtung 01 entspricht, unterscheidet sich durch die Bauart und Funktion der beiden Formbacken 19 und 20. Die Formbacken 19 und 20 sind jeweils zweiteilig aus zwei Teilen 21 und 22 beziehungsweise 23 und 24 aufgebaut. Am vorderen Teil 22 der Formbacke 20 ist wiederum ein Vorsprung 27 zum Anheben des Endes 13 am Teigling 02 vorhanden. Der jeweils zweite Teil 22 und 24 der Formbacken 19 und 20 kann mit einer nicht dargestellten Antriebseinrichtung relativ zum jeweils ersten Teil 21 und 23 der Formbacken 19 und 20 um die Schwenkachsen 25 und 26 verschwenkt werden. Der jeweils zweite Teil 22 und 24 der Formbacken 19 und 20 kann mit jeweils einer Gleitfläche am Teigling 02 zum Eingriff kommen.

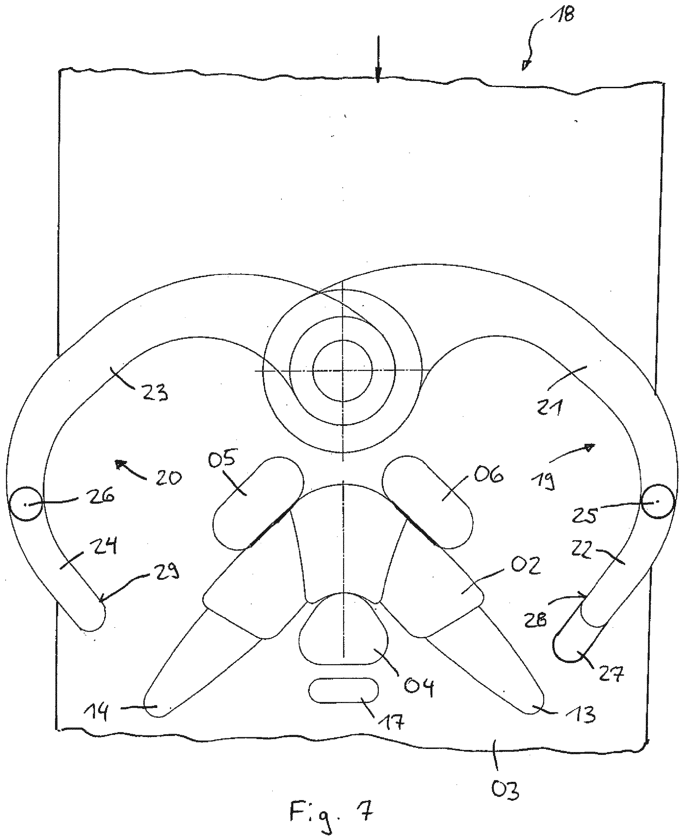

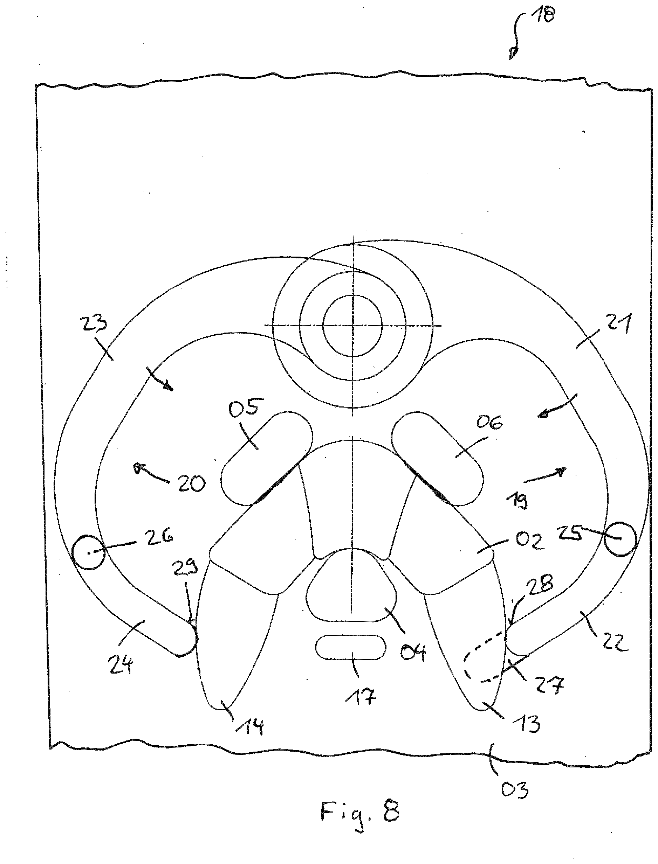

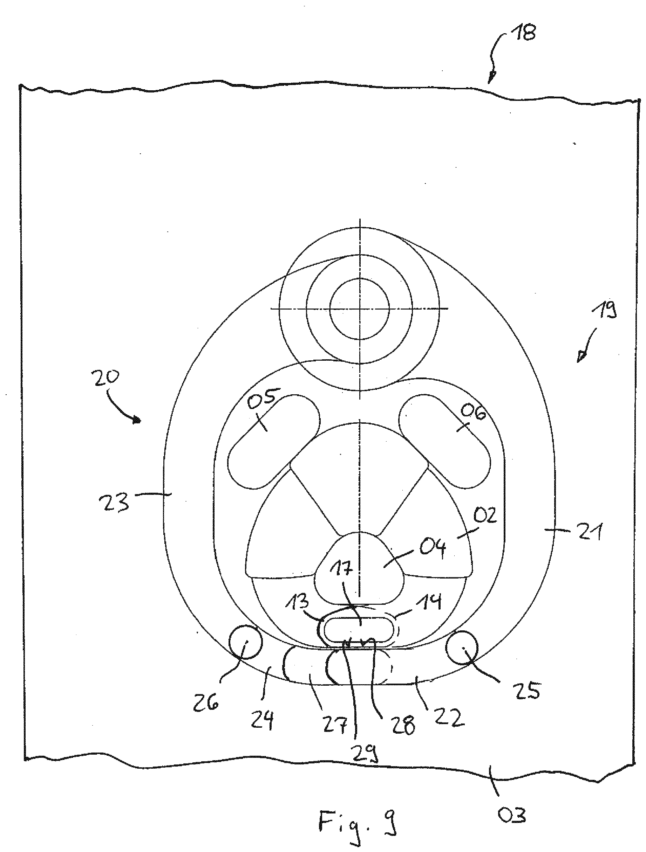

In den Zeichnungen **Fig. 6** bis **Fig. 10** ist die Funktionsweise der Vorrichtung 18 beim ringförmigen Biegen von zunächst geradlinig gewickelten Teiglingen 02 schematisch dargestellt. Wie aus den Zeichnungen **Fig. 6** bis **Fig. 9** ersichtlich, entspricht die Funktion der Vorrichtung 18 bis zum Erreichen der Endposition des Verfahrwegabschnittes zum ringförmigen Biegen eines Teiglings 02 der Funktion der Vorrichtung 01, wie sie in den Zeichnungen **Fig. 1** bis **Fig. 4** dargestellt ist.

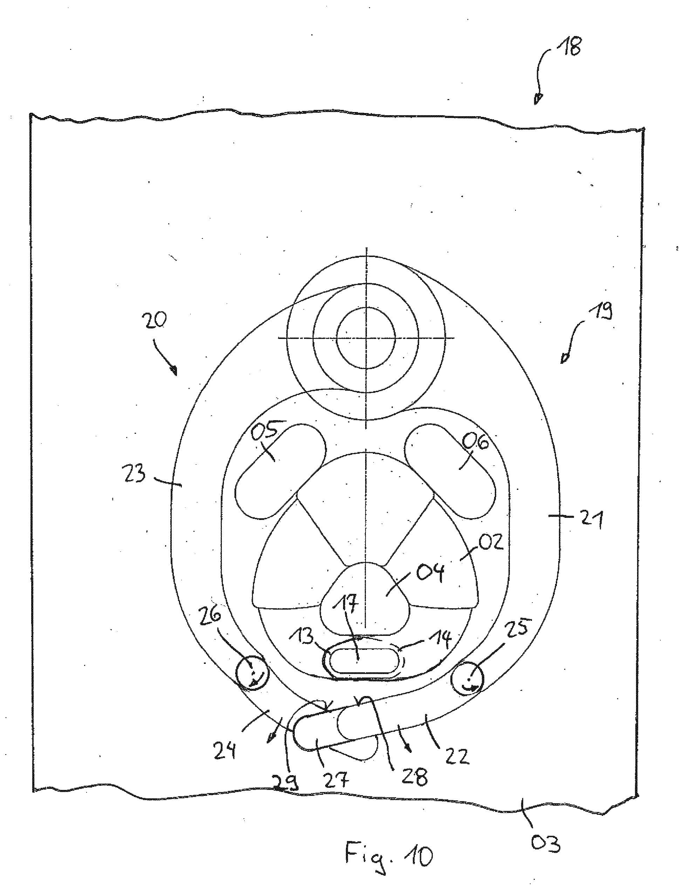

**Fig. 10** zeigt die Funktionsweise der Vorrichtung 18, nachdem die Endposition des Verfahrwegabschnittes zum ringförmigen Biegen des Teiglings 02 erreicht worden ist. Damit die Formbacken 19 und 20 vom Teigling 02 gelöst werden können ohne die Teigoberfläche zu beschädigen, wird der jeweils vordere Teil 22 und 24 der Formbacken 19 und 20 separat angetrieben und dadurch ohne Stellbewegung der hinteren Teile 21 und 23 der Formbacken 19 und 20 vom Teigling 02 weggeschwenkt. Dadurch wird das beim Schließen der Formbacken 19 und 20 erwünschte Gleiten der Formbacken 19 und 20 über den Teigling während des Öffnens der Formbacken 19 und 20 vermieden. Stattdessen werden die Gleitflächen 28 und 29 der Formbacken 19 und 20 durch ein ruckartiges Ablösen außer Eingriff des Teiglings 02 gebracht.

## Patentansprüche

1. Vorrichtung (01, 18) zum Formen von im Wesentlichen geradlinigen, insbesondere gewickelten, Teiglingen (02) in eine ringförmige Gestalt mit einer Biegeeinheit zum Rundbiegen des Teiglings (02), wobei die Biegeeinheit umfasst:
- zumindest einen Haltebacken (04), der an der Innenseite des Teiglings (02) zur Anlage gebracht werden kann und eine Ausnehmung im ringförmig gebogenen Teigling (02) bildet,
- und zwei beweglich gelagerte Formbacken (07, 08, 19, 20), die auf der Außenseite des Teiglings (02) zum Eingriff gebracht werden können, wobei der Teigling (02) durch Antrieb der Formbacken (07, 08, 19, 20) ringförmig um die Haltebacke (04) gebogen werden kann,
- und eine Hubvorrichtung, wobei durch Antrieb der Hubvorrichtung eine Formbacke (08, 19) angehoben werden kann, und wobei an diesem Formbacken (08, 19) ein Vorsprung (12, 27) vorgesehen ist, der bei Anlage des Formbacken (08, 19) am Teigling (02) auf der Unterseite des Teiglings (02) anliegt, und wobei durch Antrieb der Hubvorrichtung der Vorsprung (12, 27) angehoben werden kann, um das auf dem Vorsprung (12, 27) aufliegende Ende (13) des Teiglings (02) anzuheben und überlappend auf dem anderen Ende (14) des Teiglings (02) anzuordnen,
- und einen Stempel (17), wobei durch Antrieb des Stempels (17) die einander überlappend angeordneten Enden (13, 14) des ringförmig gebogenen Teiglings (02) zwischen einer Unterlage (03) und dem Stempel (17) gegeneinander gedrückt werden können,
wobei der mit dem Vorsprung (12, 27) versehene Formbacken (08, 19) dazu konfiguriert ist, während des Eingriffs am Teigling (02) entlang eines Verfahrwegabschnittes zwischen einer Anfangsposition und einer Endposition verfahren zu werden, wobei der Vorsprung (12, 27) dazu konfiguriert ist, in der Anfangsposition auf der Unterseite des Teiglings (02) anzuliegen, und wobei der Vorsprung (12, 27) dazu konfiguriert ist, in der Endposition außer Eingriff mit dem Teigling (02) zu sein,
**dadurch gekennzeichnet, dass** die Formbacken (07, 08, 19, 20) in der Endposition des Verfahrwegabschnittes übereinanderliegend angeordnet sind.

2. Vorrichtung nach Anspruch 1, **dadurch gekennzeichnet, dass** der Vorsprung (12, 27) am freien Ende (11) des Formbackens (08, 19) übersteht, wobei der Vorsprung (12, 27) dazu konfiguriert ist, in der Anfangsposition quer zur Mittelachse (30) des Teiglings (02) zu verlaufen, und wobei der Vorsprung (12, 27) dazu konfiguriert ist, in der Endposition parallel zur Mittelachse (30) des Teiglings (02) zu verlaufen.

3. Vorrichtung nach Anspruch 2, **dadurch gekennzeichnet, dass** in der Endposition der Abstand zwischen den am Teigling (02) anliegenden Formbacken (07, 08, 19, 20) einerseits und der Rückseite des Haltebackens (04) anderseits der Breite der Enden (13, 14) des Teiglings (02) entspricht.

4. Vorrichtung nach einem der Ansprüche 1 bis 3, **dadurch gekennzeichnet, dass** die Formbacken (07, 08, 19, 20) jeweils eine Gleitfläche (15, 16, 28, 29) aufweisen, die am Teigling (02) zum Eingriff kommt, wobei die Gleitflächen (15, 16, 28, 29) während des Eingriffs am Teigling (02) entlang des Verfahrwegabschnitts auf der Oberfläche des Teiglings (02) abgleiten und/oder abwälzen.

5. Vorrichtung nach Anspruch 4, **dadurch gekennzeichnet dass** die Formbacken (19, 20) jeweils zweiteilig ausgebildet sind, wobei der zweite Teil (22, 24) der Formbacken (19, 20) mit einer Antriebseinrichtung relativ zum ersten Teil (21, 23) der Formbacken (19, 20) verschwenkt werden kann, und wobei der zweite Teil (22, 24) der Formbacken (19, 20) mit einer Gleitfläche (28, 29) am Teigling zum Eingriff kommen kann, und wobei die Formbacken (19, 20) durch Verschwenken des zweiten Teils (22, 24) außer Eingriff gebracht werden können.

6. Vorrichtung nach einem der Ansprüche 1 bis 5, **dadurch gekennzeichnet, dass** die Vorrichtung (01, 18) zwei zusätzliche Vorformbacken (05, 06) aufweist, die auf der Außenseite des Teiglings (02) zum Eingriff gebracht werden können, wobei der geradlinige Teigling (02) durch Antrieb der Vorformbacken (05, 06) spangenförmig um die Haltebacke (04) gebogen werden kann.

7. Vorrichtung nach einem der Ansprüche 1 bis 6, **dadurch gekennzeichnet, dass** der Haltebacken (04) einen runden oder dreieckförmigen Querschnitt aufweist, wobei eine abgerundete Spitze des dreieckförmigen Haltebackens (04) dazu konfiguriert ist, an der Mitte des geradlinigen Teiglings (02) anzuliegen und/oder dass sich der Haltebacken (04) nach unten hin verjüngt, insbesondere dass der Haltebacken (04) konisch ausgebildet ist.

8. Vorrichtung nach einem der Ansprüche 1 bis 7, **dadurch gekennzeichnet, dass** die Biegeeinheit insgesamt oder die Formbacken (07, 08, 19, 20) und/oder der Haltebacken (04) und/oder zwei Vorformbacken (05, 06) und/oder der Stempel (17) auswechselbar an der Vorrichtung (01, 18) befestigt ist.

9. Vorrichtung nach einem der Ansprüche 1 bis 8, **dadurch gekennzeichnet, dass** die Vorrichtung (01, 18) einen Lagesensor, insbesondere eine Bildkamera, mit einer Auswerteeinheit umfasst, wobei der Lagesensor die Position des Teiglings (02) feststellen kann.

10. Verfahren zum Formen von im Wesentlichen geradlinigen, insbesondere gewickelten, Teiglingen (02) in eine ringförmige Gestalt mit einer Biegeeinheit zum Rundbiegen des Teiglings (02), mit folgenden Verfahrensschritten:
- gleichzeitige Anlage einer Haltebacke (04) an der Innenseite des Teiglings (02) und zweier beweglich gelagerter Formbacken (07, 08, 19, 20) auf der Außenseite des Teiglings (02) an der Anfangsposition eines Verfahrwegabschnitts der beiden Formbacken (07, 08, 19, 20), wobei an einem Formbacken (07, 08, 19, 20) ein Vorsprung (12, 27) vorgesehen ist, der in der Anfangsposition auf der Unterseite des Teiglings (02) anliegt;
- Verfahren der Formbacken (07, 08, 19, 20) entlang eines Verfahrwegabschnitts bis zum Erreichen einer Endposition, wobei der den Vorsprung (12, 27) aufweisende Formbacken (08, 19) entlang des Verfahrwegabschnittes mit einer Hubvorrichtung angehoben wird, um das eine Ende (13) des Teiglings (02) anzuheben und auf dem anderen Ende (14) des Teiglings (02) überlappend anzuordnen, und wobei der Vorsprung (12, 27) entlang des Verfahrwegabschnittes relativ zum Teigling (02) verschwenkt wird, und wobei der Vorsprung (12, 27) in der Anfangsposition auf der Unterseite des Teiglings (02) anliegt, und wobei der Vorsprung in der Endposition außer Eingriff des Teiglings (02) gebracht ist;
- Verfahren eines Stempels (17), wobei durch Antrieb des Stempels (17) die einander überlappend angeordneten Enden (13, 14) des ringförmig gebogenen Teiglings (02) zwischen einer Unterlage (03) und dem Stempel (17) gegeneinander gedrückt werden,
**dadurch gekennzeichnet, dass** die Formbacken (07, 08, 19, 20) in der Endposition des Verfahrwegabschnittes übereinanderliegend angeordnet sind.

11. Verfahren nach Anspruch 10, **dadurch gekennzeichnet, dass** die Formbacken (07, 08, 19, 20) während des Biegeeingriffs jeweils mit einer Gleitfläche (15, 16, 28, 29) auf der Oberfläche des Teiglings (02) entlang gleiten und/oder abwälzen.

12. Verfahren nach Anspruch 10 oder 11, **dadurch gekennzeichnet, dass** der geradlinige Teigling (02) durch Antrieb zweier Vorformbacken (05, 06) spangenförmig um die Haltebacke (04) gebogen wird und anschließend durch Antrieb der beiden Formbacken (07, 08, 19, 20) ringförmig um die Haltebacke (04) gebogen wird.

13. Verfahren nach einem der Ansprüche 10 bis 12, **dadurch gekennzeichnet, dass** die Formbacken (07, 08, 19, 20) während des Verfahrens des Stempels (17) ausgehend von der Endposition auseinander gefahren werden.

14. Verfahren nach Anspruch 13, **dadurch gekennzeichnet dass** die Formbacken (19, 20) jeweils zweiteilig ausgebildet sind, wobei der zweite Teil (22, 24) der Formbacken (19, 20) mit einer Antriebseinrichtung relativ zum ersten Teil (21, 23) der Formbacken (19, 20) verschwenkt werden kann, und wobei der zweite Teil (22, 24) der Formbacken (19, 20) zwischen der Anfangsposition und der Endposition des Verfahrwegabschnittes mit einer Gleitfläche (28, 29) am Teigling (02) zum Eingriff kommt, und wobei der zweite Teil (22, 24) der Formbacken (19, 20) nach Erreichen der Endposition des Verfahrwegabschnittes, insbesondere während des Verfahrens des Stempels, relativ zum ersten Teil (21, 23) der Formbacken (19, 20) verschwenkt wird, um die Gleitflächen (28, 29) außer Eingriff des Teiglings (02) zu bringen.

## Claims

1. A device (01, 18) for forming substantially straight, in particular wound, dough pieces (02) into an annular shape, comprising a bending unit for annularly bending the dough piece (02), the bending unit comprising:
- at least one retaining jaw (04), which is adapted to be brought into contact with the inner side of the dough piece (02) and which forms an opening into the annularly bent dough piece (02),
- and two movably supported shaping jaws (07, 08, 19, 20), which are adapted to be brought into engagement with the outer side of the dough piece (02), wherein the dough piece (02) can be annularly bent around the retaining jaw (04) by driving the shaping jaws (07, 08, 19, 20),
- and a lifting device, one shaping jaw (08, 19) being adapted to be lifted by driving the lifting device, and this shaping jaw (08, 19) having provided thereon a projection (12, 27) which, when the shaping jaw (08, 19) is in contact with the dough piece (02), contacts the lower surface of the dough piece (02), and the projection (12, 27) being adapted to be lifted by driving the lifting device, so as to lift the end (13) of the dough piece (02), which rests on the projection (12, 27), and arrange it on the other end (14) of the dough piece (02) in an overlapping mode,
- and a stamp (17), the overlappingly arranged ends (13, 14) of the annularly bent dough piece (02) being adapted to be pressed against each other between a support (03) and the stamp (17) by driving the stamp (17),
wherein, while being in engagement with the dough piece (02), the shaping jaw (08, 19) provided with the projection (12, 27) is configured to be displaced along a displacement path section between an initial position and a final position, wherein the projection (12, 27) is configured to be in contact with the lower surface of the dough piece (02) at the initial position, and wherein the projection (12, 27) is configured to be brought out of engagement with the dough piece (02) at the final position,
**characterized in that** the shaping jaws (07, 08, 19, 20) are arranged one above the other at the final position of the displacement path section.

2. The device according to claim 1, **characterized in that** the projection (12, 27) protrudes beyond the free end (11) of the shaping jaw (08, 19), wherein the projection (12, 27) is configured to extend transversely to the center axis (30) of the dough piece (02) at the initial position, and wherein the projection (12, 27) is configured to extend parallel to the center axis (30) of the dough piece (02) at the final position.

3. The device according to claim 2, **characterized in that**, at the final position, the distance between the shaping jaws (07, 08, 19, 20), which are in contact with the dough piece (02), on the one hand and the back of the retaining jaw (04) on the other corresponds to the width of the ends (13, 14) of the dough piece (02).

4. The device according to one of the claims 1 to 3, **characterized in that** the shaping jaws (07, 08, 19, 20) each have a sliding surface (15, 16, 28, 29), which enters into engagement with the dough piece (02), the sliding surfaces (15, 16, 28, 29) sliding and/or rolling on the surface of the dough piece (02) while they are in engagement with the dough piece (02) along the displacement path section.

5. The device according to claim 4, **characterized in that** the shaping jaws (19, 20) are each bipartite, wherein the second part (22, 24) of the shaping jaws (19, 20) can be pivoted relative to the first part (21, 23) of the shaping jaws (19, 20) by means of a drive unit, and wherein the second part (22, 24) of the shaping jaws (19, 20) is adapted to enter into engagement with the dough piece with a sliding surface (28, 29) thereof, and wherein the shaping jaws (19, 20) are adapted to be brought out of engagement by pivoting the second part (22, 24).

6. The device according to one of the claims 1 to 5, **characterized in that** the device (01, 18) comprises two additional pre-shaping jaws (05, 06), which are adapted to be brought into engagement with the outer side of the dough piece (02), wherein the straight dough piece (02) can be bent round the retaining jaw (04) in a bow shape by driving the pre-shaping jaws (05, 06).

7. The device according to one of the claims 1 to 6, **characterized in that** the retaining jaw (04) is round or triangular in cross-section, wherein a rounded tip of the triangular retaining jaw (04) is configured to lie against the center of the straight dough piece (02) and/or that the retaining jaw (04) tapers in a downward direction, in particular that the retaining jaw (04) is configured conically.

8. The device according to one of the claims 1 to 7, **characterized in that** the bending unit in its entirety or the shaping jaws (07, 08, 19, 20) and/or the retaining jaw (04) and/or two pre-shaping jaws (05, 06) and/or the stamp (17) are replaceably fixed to the device (01, 18).

9. The device according to one of the claims 1 to 8, **characterized in that** the device (01, 18) comprises a position sensor, in particular a picture camera, with an evaluation unit, the position sensor being able to detect the position of the dough piece (02).

10. A method for forming substantially straight, in particular wound, dough pieces (02) into an annular shape, using a bending unit for annularly bending the dough piece (02), the method comprising the following steps:
- a retaining jaw (04) contacting the inner side of the dough piece (02) and, simultaneously, two movably supported shaping jaws (07, 08, 19, 20) contacting the outer side of the dough piece (02) at the initial position of a displacement path section of the two shaping jaws (07, 08, 19, 20), one of the shaping jaws (07, 08, 19, 20) having provided thereon a projection (12, 27) which is in contact with the lower surface of the dough piece (02) at the initial position;
- displacing the shaping jaws (07, 08, 19, 20) along a displacement path section until they reach a final position, the shaping jaw (08, 19) provided with the projection (12, 27) being lifted by means of a lifting device along the displacement path section, so as to lift one end (13) of the dough piece (02) and arranging this end (13) on the other end (14) of the dough piece (02) in an overlapping mode, and wherein the projection (12, 27) is pivoted relative to the dough piece (02) along the displacement path section, and wherein the projection (12, 27) is in contact with the lower surface of the dough piece (02) at the initial position, and wherein the projection has been brought out of engagement with the dough piece (02) at the final position;
- displacing a stamp (17), the overlappingly arranged ends (13, 14) of the annularly bent dough piece (02) being pressed against each other between a support (03) and the stamp (17) by driving the stamp (17)
**characterized in that** the shaping jaws (07, 08, 19, 20) are arranged one above the other at the final position of the displacement path section.

11. The method according to claim 10, **characterized in that**, while being in bending engagement, the shaping jaws (07, 08, 19, 20) each slide and/or roll on the surface of the dough piece (02) with a sliding surface (15, 16, 28, 29) thereof.

12. The method according to claim 10 or 11, **characterized in that**, by driving two pre-shaping jaws (05, 06), the straight dough piece (02) is bent round the retaining jaw (04) in a bow shape, and that, subsequently, it is annularly bent around the retaining jaw (04) by driving the two shaping jaws (07, 08, 19, 20).

13. The method according to one of the claims 10 to 12, **characterized in that**, during displacement of the stamp (17), the shaping jaws (07, 08, 19, 20) are moved apart starting from the final position.

14. The method according to claim 13, **characterized in that** he shaping jaws (19, 20) are each bipartite, wherein the second part (22, 24) of the shaping jaws (19, 20) can be pivoted relative to the first part (21, 23) of the shaping jaws (19, 20) by means of a drive unit, and wherein the second part (22, 24) of the shaping jaws (19, 20) enters into engagement with the dough piece (02) with a sliding surface (28, 29) thereof between the initial position and the final position of the displacement path section, and wherein, after having reached the final position of the displacement path section, in particular during displacement of the stamp (17), the second part (22, 24) of the shaping jaws (19, 20) is pivoted relative to the first part (21, 23) of the shaping jaws (19, 20), so as to bring the sliding surfaces (28, 29) out of engagement with the dough piece (02).

## Revendications

1. Dispositif (01, 18) pour former des pâtons (02) essentiellement rectilignes, en particulier enroulés, en une forme annulaire comprenant une unité de cintrage pour cintrer le pâton (02), dans lequel l'unité de cintrage comprend :
- au moins une mâchoire de retenue (04) qui peut être appliquée contre la face intérieure du pâton (02) et qui forme un évidement dans le pâton (02) cintrée en une forme annulaire,
- et deux mâchoires de formage (07, 08, 19, 20) montées mobiles qui peuvent être mises en prise sur le côté extérieur du pâton (02), dans lequel le pâton (02) peut être cintré de manière annulaire autour de la mâchoire de retenue (04) par l'entraînement des mâchoires de formage (07, 08, 19, 20),
- et un dispositif de levage, dans lequel une mâchoire de formage (08, 19) peut être soulevée en entraînant le dispositif de levage, et dans lequel une saillie (12, 27) est prévue sur cette mâchoire de formage (08, 19) qui, lorsque la mâchoire de formage (08, 19 ) repose contre le pâton (02) sur la face inférieure du pâton (02), et dans lequel la saillie (12, 27) peut être soulevée en entraînant le dispositif de levage afin de soulever l'extrémité (13) du pâton (02) reposant sur la saillie (12, 27) et disposée en chevauchement sur l'autre extrémité (14) du pâton (02),
- et un piston (17), dans lequel les extrémités (13, 14) du pâton (02) cintré de manière annulaire, disposées en chevauchement, peuvent être pressées l'une contre l'autre entre un support (03) et le piston (17) par un entraînement du piston (17), dans lequel la mâchoire de formage (08, 19) pourvue de la saillie (12, 27) est configurée pour être déplacée le long d'une section de déplacement entre une position initiale et une position finale pendant la mise en prise avec le pâton (02), dans lequel la saillie (12, 27) est configurée pour reposer contre la face inférieure du pâton (02) dans la position initiale, et dans lequel la saillie (12, 27) est configurée pour être libérée de la mise en prise avec le pâton (02) dans la position finale,
**caractérisé en ce que** les mâchoires de formage (07, 08, 19, 20) sont agencées l'une au-dessus de l'autre dans la position finale de la section de déplacement.

2. Dispositif selon la revendication 1, **caractérisé en ce que** la saillie (12, 27) dépasse au niveau de l'extrémité libre (11) de la mâchoire de moulage (08, 19), dans lequel la saillie (12, 27) est configurée pour s'étendre transversalement à l'axe central (30) du pâton (02) dans la position initiale et dans lequel la saillie (12, 27) est configurée pour s'étendre parallèlement à l'axe central (30) du pâton (02) dans la position finale.

3. Dispositif selon la revendication 2, **caractérisé en ce que** dans la position finale, la distance entre les mâchoires de formage (07, 08, 19, 20) appliquées contre le pâton (02) d'une part, et la face arrière de la mâchoire de retenue (04) d'autre part, correspond à la largeur des extrémités (13, 14) du pâton (02).

4. Dispositif selon l'une quelconque des revendications 1 à 3, **caractérisé en ce que** les mâchoires de formage (07, 08, 19, 20) présentent chacune une surface de glissement (15, 16, 28, 29) qui vient en prise avec le pâton (02), dans lequel les surfaces de glissement (15, 16, 28, 29) glissent et/ou roulent le long de la section de déplacement sur la surface du pâton (02) pendant la mise en prise avec le pâton (02).

5. Dispositif selon la revendication 4, **caractérisé en ce que** les mâchoires de formage (19, 20) sont formées chacune en deux parties, dans lequel la seconde partie (22, 24) des mâchoires de formage (19, 20) peut être pivotée à l'aide d'un dispositif d'entraînement par rapport à la première partie (21, 23) des mâchoires de formage (19, 20), et dans lequel la seconde partie (22, 24) des mâchoires de formage (19, 20) peut venir en prise avec une surface de glissement (28, 29) sur le pâton, et dans lequel les mâchoires de formage (19, 20) peuvent être mises hors de prise par pivotement de la seconde partie (22, 24).

6. Dispositif selon l'une quelconque des revendications 1 à 5, **caractérisé en ce que** le dispositif (01, 18) présente deux mâchoires de pré-formage supplémentaires (05, 06) qui peuvent être amenées en prise sur la face extérieure du pâton (02), dans lequel le pâton rectiligne (02) peut être cintré en forme de pince autour de la mâchoire de retenue (04) par entraînement des mâchoires de pré-formage (05, 06).

7. Dispositif selon l'une quelconque des revendications 1 à 6, **caractérisé en ce que** la mâchoire de retenue (04) présente une section transversale ronde ou triangulaire, dans lequel une pointe arrondie de la mâchoire de retenue triangulaire (04) est configurée pour reposer contre le centre du pâton rectiligne (02) et/ou **en ce que** la mâchoire de retenue (04) est effilée vers le bas, en particulier **en ce que** la mâchoire de retenue (04) est conique.

8. Dispositif selon l'une quelconque des revendications 1 à 7, **caractérisé en ce que** l'unité de cintrage dans son ensemble ou les mâchoires de formage (07, 08, 19, 20) et/ou les mâchoires de retenue (04) et/ou deux mâchoires de pré-formage (05, 06) et/ou le piston (17) sont fixés de manière interchangeable au dispositif (01, 18).

9. Dispositif selon l'une quelconque des revendications 1 à 8, **caractérisé en ce que** le dispositif (01, 18) comprend un capteur de position, en particulier une caméra de contrôle, avec une unité d'évaluation, dans lequel le capteur de position peut déterminer la position du pâton (02).

10. Procédé pour former des pâtons (02) essentiellement rectilignes, en particulier enroulés, en une forme annulaire avec une unité de cintrage pour cintrer le pâton (02), comprenant les étapes de procédé suivantes consistant à :
- appliquer simultanément une mâchoire de retenue (04) sur la face intérieure du pâton (02) et deux mâchoires de formage (07, 08, 19, 20) montées mobiles sur la face extérieure du pâton (02) dans la position initiale d'une section de déplacement des deux mâchoires de formage (07, 08, 19, 20), dans lequel une saillie (12, 27) est prévue sur une mâchoire de formage (07, 08, 19, 20), qui repose dans la position initiale sur la face inférieure du pâton (02) ;
- déplacer les mâchoires de formage (07, 08, 19, 20) le long d'une section de déplacement jusqu'à ce qu'elles atteignent une position finale, dans lequel la mâchoire de formage (08, 19) présentant la saillie (12, 27) est soulevée le long de la section de déplacement à l'aide d'un dispositif de levage afin de soulever une extrémité (13) du pâton (02) et de la placer en chevauchement sur l'autre extrémité (14) du pâton (02), et dans lequel la saillie (12, 27) est pivotée le long de la section de déplacement par rapport au pâton (02), et dans lequel la saillie (12, 27) repose dans la position initiale sur la face inférieure du pâton (02), et dans lequel la saillie est libérée de la mise en prise du pâton (02) dans la position finale ;
- déplacer un piston (17), dans lequel les extrémités (13, 14) du pâton (02) cintré de manière annulaire, disposées en chevauchement, sont pressées l'une contre l'autre entre un support (03) et le piston (17) par un entraînement du piston (17),
**caractérisé en ce que** les mâchoires de formage (07, 08, 19, 20) sont agencées l'une au-dessus de l'autre dans la position finale de la section de déplacement.

11. Procédé selon la revendication 10, **caractérisé en ce que** les mâchoires de formage (07, 08, 19, 20) glissent et/ou roulent respectivement avec une surface de glissement (15, 16, 28, 29) le long de la surface du pâton (02) pendant la mise en prise de cintrage.

12. Procédé selon la revendication 10 ou 11, **caractérisé en ce que** le pâton rectiligne (02) est cintré en forme de pince autour de la mâchoire de retenue (04) par un entraînement de deux mâchoires de pré-formage (05, 06) et est ensuite cintré de manière annulaire autour de la mâchoire de retenue (04) par un entraînement des deux mâchoires de formage (07, 08, 19, 20).

13. Procédé selon l'une quelconque des revendications 10 à 12, **caractérisé en ce que** les mâchoires de formage (07, 08, 19, 20) sont écartées l'une de l'autre pendant le déplacement du piston (17) à partir de la position finale.

14. Procédé selon la revendication 13, **caractérisé en ce que** les mâchoires de formage (19, 20) sont formées chacune en deux parties, dans lequel la seconde partie (22, 24) des mâchoires de formage (19, 20) peut être pivotée à l'aide d'un dispositif d'entraînement par rapport à la première partie (21, 23) des mâchoires de formage (19, 20), et dans lequel la seconde partie (22, 24) des mâchoires de formage (19, 20) est mise en prise entre la position initiale et la position finale de la section de déplacement avec une surface de glissement (28, 29) sur le pâton (02), et dans lequel la seconde partie (22, 24) des mâchoires de formage (19, 20) est pivotée par rapport à la première partie (21, 23) des mâchoires de formage (19, 20) après avoir atteint la position finale de la section de déplacement, en particulier pendant le déplacement du piston, afin d'amener les surfaces de glissement (28, 29) hors de prise avec le pâton (02).
